# EUROPEAN PATENT SPECIFICATION

(11) **EP 2 977 686 B1**
(45) Date of publication and mention of the grant of the patent: **28.03.2018**
(21) Application number: 15176816.5
(22) Date of filing: 15.07.2015
(51) Int. Cl.: F24D 3/14, E04F 15/02, F24D 3/16, A47K 3/40

(54) **UNDERFLOOR HEATING BOARD**
FUSSBODENHEIZUNGSPLATTE
PANNEAU DE CHAUFFAGE SOUS PLANCHER

(30) Priority: 23.07.2014 SE 1450910
(43) Date of publication of application: 27.01.2016
(73) Proprietor: DALAB Dala Golvsystem AB, 785 42 Mockfjärd (SE)
(72) Inventor: KALLEBERG, Anders, 785 62 DJURMO (SE)
(74) Representative: Bergenstråhle Group AB

(56) References cited:
- EP-A1- 2 672 187
- WO-A1-2013/172775
- DE-A1- 10 002 373
- DE-A1- 19 920 457
- DE-U1- 29 911 861
- DE-U1-202005 002 322
- DE-U1-202009 011 156
- JP-A- H11 229 599
- JP-A- H11 264 556

## Description

### TECHNICAL FIELD

The present invention relates to an underfloor heating board for installation in a wet room, comprising a board with grooves, wherein the grooves are adapted to accommodate hydronic heating, said underfloor heating board also comprises a built-in fall on a top side of said underfloor heating board. The invention also relates to an underfloor heating board system and a method for manufacturing an underfloor heating board.

### BACKGROUND

When installing underfloor heating in wet rooms, electric, or alternatively hydronic heating is embedded, for example, by applying self-levelling compound. By applying self-levelling compound, it is also possible to have a floor sloping toward, for example, a floor drain. When applying self-levelling compound, however, long drying times are required, which means that the installation/construction will come to a halt in the meantime. It may also be difficult to achieve exactly the desired fall of the floor.

JPH 11264556 discloses a floor heating panel consisting of a wooden board with grooves on its lower surface in which hot-water pipes are disposed. A lining sheet is bonded to the lower surface of the panel so as to close the grooves, and, on the upper surface of the panel, a heat equilibrium sheet of aluminium, or the like, is disposed.

WO 00/32991 discloses a heating system comprising a board which has recesses in its upper surface, and a pipe disposed in the recess. A film of metal covers the board, and the thickness of the film is proportional to the thermal properties of the board, in order to achieve the desired thermal characteristics of the heating system.

JP 2002081661 discloses a floor heating panel comprising a plate having grooves wherein tubes are fitted, and a surface plate is disposed on the upper surface of the plate, so that the tubes are embedded in the grooves. The plate is further provided with accelerating heat transfer members, which increase the quantity of heat transferred from the tubes to the upper surface of the plate.

WO 2013/172775 discloses to a surface covering system intended for a surface in the form of a wet room floor, a roof or another substantially flat, delimited surface which is exposed to water and needs drainage, and to methods for preparing such a system. The surface covering system comprises at least one plate with a mark showing a drainage point and a substantially flat lower surface and an upper surface with a first decline towards the mark. The first decline is circular and has a radial slope directed towards the mark from every point on the at least one plate. In this way the decline creates a cavity in the plate in the shape of at least a part of a blunt virtual cone with the apex of the cone directed towards the mark. This achieves a modular surface covering system with an even circular decline, starting from the placement of the drainage point/points in a specific limited space.

DE 199 20 457 discloses a method for producing a building plate for floors and walls involves provision of channels with overhung sections for accommodation of piping carrying heating or cooling media. The angle of wrap of the channel on the piping, in particular, lies between 190 deg and 250 deg.

### BRIEF DESCRIPTION OF THE INVENTION

It is an object of the present invention to provide an improved underfloor heating system which overcomes, or at least minimizes, the disadvantages of the previously described problems. This can be achieved by means of an underfloor heating board according to claim 1.

Thanks to the invention, underfloor heating for a wet room is provided, wherein the underfloor heating is installed considerably faster and easier than in the existing technique.

According to one aspect of the invention, the underfloor heating board comprises grooves intended to accommodate hydronic heating, and that said underfloor heating board is constituted by a MDF board, which offers the advantage that the heat is distributed efficiently and the desired heating effect can be achieved without using any kind of additional heat transfer means, such as a metal sheet arranged in the grooves, which saves both time and material consumption.

According to another aspect of the invention, the grooves are disposed on the underside of the underfloor heating board, which offers the advantage that a fall can be created on the top side of the underfloor heating board.

According to yet another aspect of the invention, the hydronic heating comprises a tube, said tube preferably being flexible, which allows it to be pressed into the groove on the underside of the underfloor heating board.

According to a further aspect of the invention, the underfloor heating board is constituted by a single board, wherein the board has been manufactured with a built-in fall, wherein the size of the board and the built-in fall are adapted according to the actual wet room in which it is to be installed. This reduces the installation process and thereby also the costs.

According to another aspect of the invention, the grooves comprise an opening, said opening being smaller than a diameter of the groove and smaller than an outer diameter of the tube for the hydronic heating, which offers the advantage that when the tube has been arranged in the grooves, it stays in the groove without detaching therefrom. According to another aspect of the invention, the opening of the groove extends along the entire groove on the underside of the underfloor heating board, which means that it is easy to manually poke/press the tube down into the groove.

### BRIEF DESCRIPTION OF THE FIGURES

In the following, the invention will be described in more detail with reference to accompanying figures, in which:
Fig. 1 shows an underfloor heating board according to the invention seen from above;
Fig. 2 shows an underfloor heating board according to the invention seen from below;
Fig. 3 shows a cross-section of a groove in the underfloor heating board according to the invention;
Fig. 3A shows a detail of the groove in the underfloor heating board according to the invention;
Fig. 4 shows a cut-away image of a floor in a wet room comprising an underfloor heating board according to the invention;
Fig. 5 shows an underfloor heating board according to a preferred embodiment of the invention;
Fig. 6 is a diagram showing the temperature measured in the underfloor heating board according to figure 5; and
Fig. 7 shows the method steps when manufacturing an underfloor heating board according to the invention.

### DETAILED DESCRIPTION OF THE FIGURES

The following detailed description and the examples therein merely have the purpose of describing and illustrating certain embodiments of the invention and are not intended to limit the scope of the invention in any way.

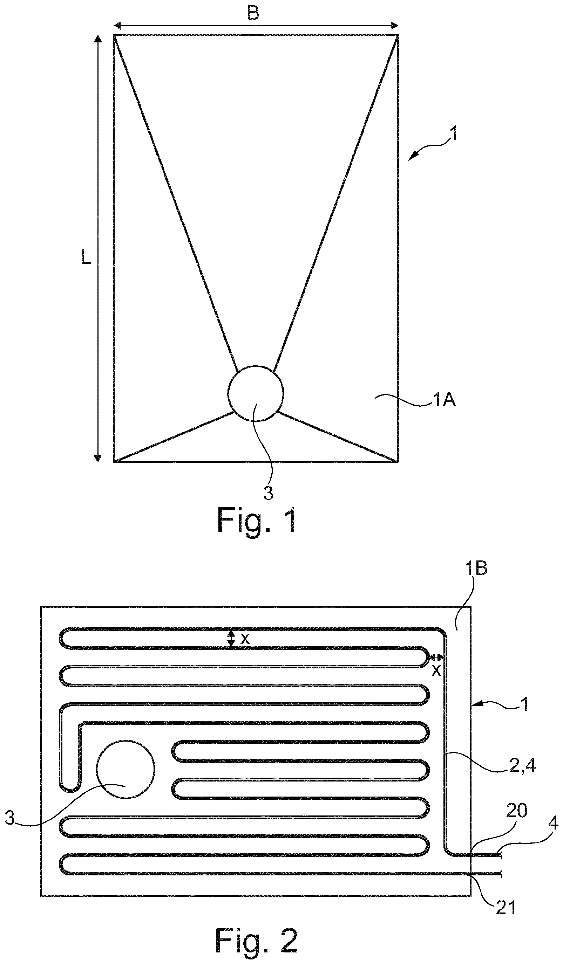

Figure 1 shows an underfloor heating board 1 according to the invention in a view from above. The underfloor heating board 1 comprises a top side 1A and a through-hole 3 intended for a water toilet or other heating, ventilation and sanitation facility. The underfloor heating board 1 has a length L and a width B, wherein the length L and width B are adapted according to the wet room in which the underfloor heating board 1 is to be installed.

In wet rooms, the portions of the floor regularly exposed to water should slope toward a drain, since an important function of a wet room is to be capable of transporting water away. The slope/fall of the floor can be accomplished in different ways, and a common way is to use self-levelling compound on the supporting subfloor. The application of self-levelling compound is done in such a way that the self-levelling compound is thickest on the parts farthest away from, for example, a floor drain, and the self-levelling compound becomes thinner and thinner closer to the floor drain, so that a slope toward the floor drain, causing water to flow toward the hole, is created. A great advantage of using an underfloor heating board 1 according to the invention is that one does not need to apply any self-levelling compound and thus saves in the drying time of approx. 18 hours. In order to create a fall of the floor, the underfloor heating board 1 according to the invention has a built-in fall toward said hole 3, which minimizes the work and the drying time during installation. Built-in fall means that the underfloor heating board 1 has a slope from its outer edges toward said hole 3, or at least in an shower area, so that water or other liquid flows toward the hole 3 if/when they end up on the floor. The lines on the underfloor heating board 1 in Figure 1, extending from the corners toward the hole 3, illustrate that the underfloor heating board 1 has an envelope shaped fall from the outer edges of the board 1 downward toward the hole 3. An envelope shaped fall is easy to arrange with various lengths of the sides, thus arranging different slopes on different sides. For example, the regulation in Sweden for a bathroom prescribe that the minimum requirement in a shower area is 1:50 and outside the shower area 1:500 - 1:100.

The underfloor heating board 1 is preferably constituted by a MDF board (Medium Density Fibreboard), a dense wood fibre board, which in tests has proven to spread heat very well. Thanks to using a MDF board, a desired heating effect, comfort heating, is achieved, usually within the range of 20-28°C, more preferably in the range of 22-26°C, without having to use any kind of additional heat transfer means, such as a metal sheet. Thanks to this, material consumption and time of work can be kept down (for example, reduced drying time as compared to applying self-levelling compound on the floor) and thus also costs. The underfloor heating board 1 preferably has a thickness T in the range of 15-50 mm, more preferably in the range of 18-40 mm, and most preferably in the range of 22-35 mm.

An underside 1B of the underfloor heating board 1 according to the invention is seen in Figure 2. The underside 1B comprises grooves 2, preferably milled-out grooves 2, extending forwards and backwards in a meandering shape. An advantage of using MDF in the underfloor heating board 1 is that it is possible to mill out the grooves 2 and get a good precision of the grooves 2, which is difficult if a different wooden board is used.

The skilled person will appreciate that the grooves 2 can, of course, also be arranged in patterns other than those shown in this specific example, but preferably the grooves 2 are disposed with a distance X therebetween. The distance X lies in the range of 30-180 mm, more preferably in the range of 40-170 mm, and most preferably in the range of 50-160 mm. The shape/pattern the grooves 2 are arranged in and the mutual distance X between them are adapted according to the desired heating effect. The above-mentioned distance X is preferred, since there would otherwise be an uneven distribution of the heat if the grooves are spaced farther away from each other, or too close to each other.

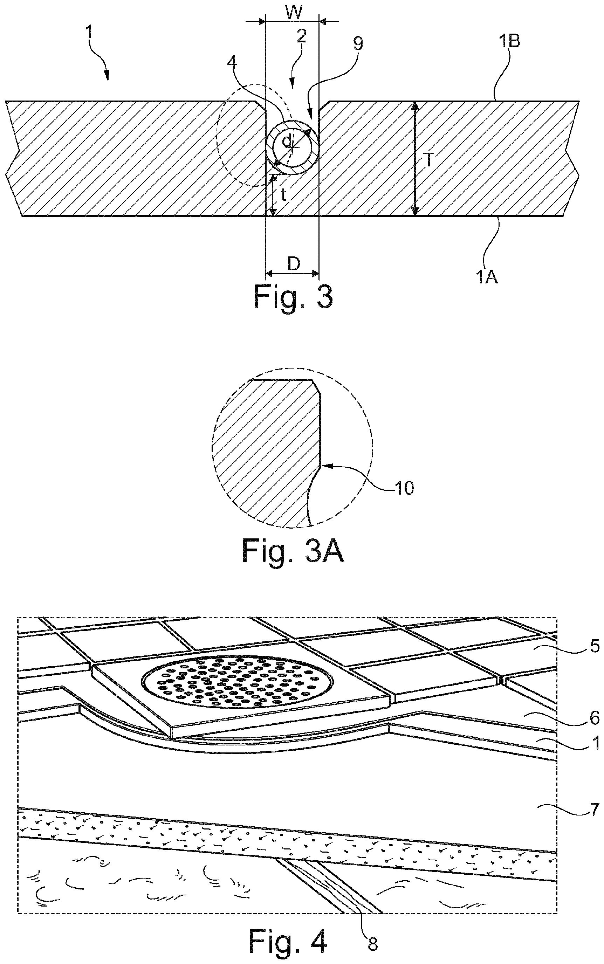

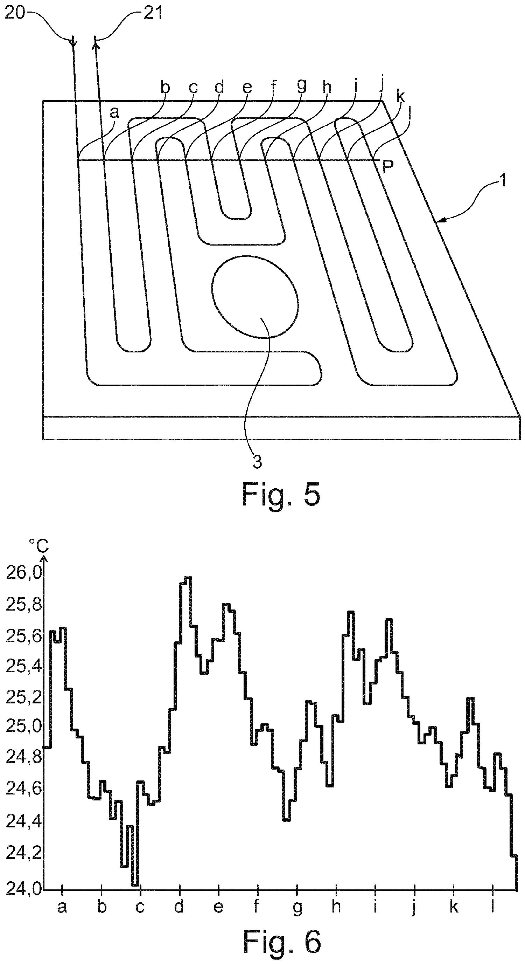

Figure 3 shows a cross-section of a groove 2 in the underfloor heating board 1 according to the invention. The groove 2 is preferably omega-shaped and has a diameter D in its inner end in the range of 5-40 mm, more preferably in the range of 6-30 mm, and most preferably in the range of 7-16 mm. The groove has a depth that is adapted to the thickness T of the heating board so that the thickness t of the remaining material between the groove and the top side 1A is at least 3 mm. However, the depth is normally constant and thus the thickness t of the remaining material varies depending on the built-in fall. It is of course conceivable to vary the depth of the groove in order to have a constant thickness between the top side 1A and the inner end of the groove 2 but this requires additional programming of the computer controlled milling machine. Also, temperature tests have shown very uniform temperatures, see figure 5 and 6, so it appears to not be motivated.

The groove 2 also comprises an opening 9, said opening extending in parallel with the underside 1B of the underfloor heating board, along the entire length of the groove 2. The opening 9 has a width W that is smaller than the diameter D of the groove 2. In this example the width of the opening is 0.2 mm smaller than the diameter D of the groove 2. A heel 10, see figure 3A showing a detail of the groove 2, is arranged between the opening 9 and the inner, semi-cylindrical end of the groove 2. A tube 4, for the hydronic heating, is disposed in the groove 2 in that the tube is poked into the groove 2 via the opening 9 extending along the entire groove 2. The tube has sufficient flexibility to enable insertion thereof into the groove 2. Furthermore, the tube is preferably made of a plastic material. The tube 4 has an outer diameter d that is smaller than the diameter D of the groove, but larger than said opening 9. Since said opening 9 is smaller than the outer diameter d of the tube, the advantage is offered that, when the tube 4 has been arranged in the groove 2 it is clamped therein. When the underfloor heating board 1 has been turned around into the right position, the tube 4 stays in the groove 2 without falling out. Thanks to this, the work operation of having to dispose a panel or the like on the underside 1B of the underfloor heating board to hold the tube 4 in place in the groove 2 is avoided. Said tube 4 is flexible, and thanks to this, the tube 4 can be pressed into the groove 2, despite the fact that the outer diameter d of the tube is larger than the opening 9. When the tube 4 is pressed down into the groove 2, the tube is compressed and becomes smaller, and when the tube is inside the cavity/groove 2 it expands to its normal size again, and advantageously contacts the inner walls of the groove. The outer diameter d of the tube is preferably as close to the diameter D of the groove as possible, since the best heat transfer between tube 4 and underfloor heating board 1 is achieved when the tube 4 is in contact with the underfloor heating board 1 in the groove 2. In this example the tube has a diameter d of 8.0 mm, the groove 2 has a diameter of 8.1 mm and the opening has a width W of 7.9 mm. It will also work if the outer diameter d of the tube is much smaller than the diameter D of the groove, but larger than the opening of the groove 9, but as good a heat transfer will not be achieved. When manufacturing the grooves 2, the edges on each side of the opening 9 are made so thick/sturdy that the tube 4 is allowed to be pressed down into the groove 2 without damaging the edges.

In Figure 2, it is seen how an inlet 20 and an outlet 21 for the hydronic heating 4 have been arranged adjacent to each other. Figure 2 shows the underside 1B of the underfloor heating board 1 with grooves 2 after the milling, and wherein the tube 4 is arranged in the grooves 2, and it is seen how the tube protrudes outside the board 1 at the inlet 20 and outlet 21 of the groove 2.

The underfloor heating board 1 according to the invention is adapted according to the size of the wet room in which it is to be installed, and according to the desired fall. The maximum size of the underfloor heating board 1 is preferably 2600x1830 mm due to practical reasons, such that it should be possible to handle the board and that the milling machine should be capable of processing the board. In those cases where the wet room is larger than 2600x1830 mm, two or more underfloor heating boards 1 are used. When two or more underfloor heating boards 1 are used, these boards are arranged next to each other by being fixed next to each other with glue on a sub floor 7. A computer controlled milling machine, in which a computer program ensures that the slope of the underfloor heating board 1 will be accurate independently of the size of the wet room, is used to produce the desired characteristics of the underfloor heating board 1. The desired location of inlet/outlet 21, 22 and the location of the hole 3 are programmed into it. Additional input data may be length L, width B, thickness T of the underfloor heating board, and the desired fall. The computer program then computes how the computer controlled milling machine should mill out the grooves 2 on the underside 1B of the underfloor heating board so that the grooves have the same or essentially the same distances X between them. The computer controlled milling machine also uses the entered input data to mill the board 1, on the upper side 1A of the underfloor heating board 1, so that it is thickest at its outer edges and the board becomes thinner and thinner toward the hole 3, so that a fall toward the hole 3 is created. The material milled away is used for heating of premises.

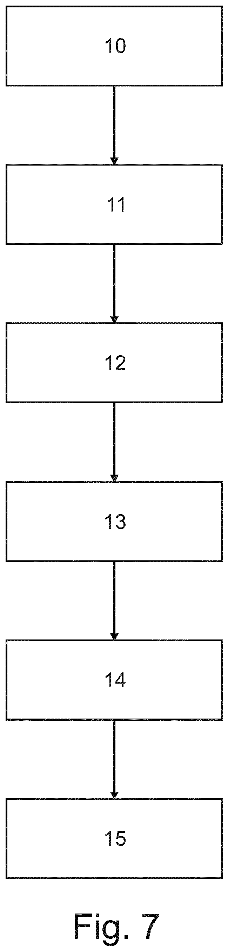

Figure 7 shows the method steps when manufacturing an underfloor heating board according to the invention. The manufacture of an underfloor heating board 1 according to the invention can be said to follow the method steps:
- providing a MDF board 10;
- entering data such as length, width, thickness of the board, and the desired fall of the board into a computer program for a computer controlled milling machine, 11;
- entering data about where inlet and outlet should be arranged into said computer program 12;
- milling out grooves and through-holes 13;
- milling away material, so that the desired fall on the top side of the board is achieved 14;
- pushing/pressing a flexible tube into the grooves 15.

The skilled person will appreciate that some of the method steps above may change places with each other without taking away from the inventive concept. For instance, the fall on the top side of the board can be milled before milling the grooves on the underside.

Accordingly, thanks to the underfloor heating board 1 according to the invention, underfloor heating can be provided where the underfloor heating is constituted by a single underfloor heating board 1, which is adapted according to the desired measurements of rooms in which it is to be installed, and according to requirements for slope/fall. Even though it is an advantage to require only a single underfloor heating board 1, the skilled person will appreciate that it is, of course, also possible to install a plurality of underfloor heating boards 1 according to the invention in a wet room.

When installing an underfloor heating board 1 according to the invention, a planar subfloor 7 (see Figure 4), such as of wood, or alternatively chipboard, is arranged on top of a floor framework 8 in the wet room. The tube 4 is arranged in the grooves 2 on the underside 1B of the board 1. In Figure 2, it is seen how inlet/outlet 20, 21 for the hydronic heating 4 have been arranged adjacent to each other. The location where the inlet/outlet 20, 21 are arranged on the board 1 is advantageously adapted to be in the proximity of where the connection is located in the wet room.

When the tube 4 has been arranged in the grooves 2, the underfloor heating board 1 is glued to the subfloor 7, and is advantageously also fixed by screwing through pre-drilled holes. Thereupon an approved sealing mat 6, or the like, is arranged on top of the underfloor heating board 1. Finally, a plastic mat, floor tiles 5, or the like, are arranged on top of the sealing mat 6, and the underfloor heating is connected.

The applicant has performed tests on the underfloor heating board 1 according to the invention in the premises of DALAB in Mockfjärd. The test was performed with an IR camera at a room temperature of 20°C. The test result shows that the heat is unevenly distributed across the underfloor heating board 1, with a variation between 22-28°C, when using electric heating coils in the grooves 2 on the underside 1B of the underfloor heating board. The warmest portions were measured in the area where the electrical heating coils are arranged. When using hydronic heating instead in an underfloor heating board 1 according to the invention the test result shows that there are no distinct areas where it is warmer. Instead, the test result shows that the heat is considerably more evenly distributed across the board 1, with a temperature variation between 22-24°C.

Further tests has been performed where two kinds of hydronic heating loop patterns have been tested. A parallel loop pattern, i.e. an inflow portion is laid alternately to an outflow portion, has been compared to a series loop pattern, i.e. the loop runs from one end to the other, and the test shows that a parallel loop pattern gives a better, more even temperature along the heating board.

An underfloor heating board 1 according to a preferred embodiment of the invention having a parallel loop pattern can be seen in figure 5. The heating board 1 is seen in a perspective view from above. The loop of the hydronic heating on the underside 1B of the board 1 is indicated by lines and it can be seen that the loop pattern is parallel. The temperature has been measured along a line P at the thickest end of the board. The temperature is measured on the top side's 1A surface in positions a - 1 matching the underlying heating tubes in the grooves 2. The flow direction of the heating fluid is indicated by arrows 20, 21.

Test data:
Distance between the grooves: 80 mm
Tube: PE-Xa, 8 x 1 mm
Thickness of board along measuring line: 35 mm
Temperature inflow: 55 C°
Temperature outflow: max 30 C°
Heater output: 1,5 kW
Ambient temperature: 20 C°
Heating duration before measuring: 24 h
Output from heating board: 54 W/m²

Figure 6 shows a diagram showing the temperature measured in the underfloor heating board according to figure 5. It can be seen that the difference between min and max temperature is small; the temperature varies from 24.0 C° to 26.0 C°. The average temperature is 25.0 C°. The temperature is lowest at point c) which likely is because the return flow will become gradually cooler from the inflow to the outflow. The temperature in position b) is probably higher because it gains heat from the incoming section of the tube in position a). Between adjacent tubes the temperature drop is in the order of 0.5 - 1.0 C°, tube at c) excluded, but will become more uniform over time.

Tests have also been performed in order to identify any possible movement of the tube in the groove due to temperature variation. No movement has been identified which indicates that the tube is well clamped in the groove 2.

A combination of a MDF board and hydronic heating thus offers great advantages with regard the heat distribution. In addition to the fact that MDF has proven to conduct hydronic heat well, it is easy to mill out/away material with good precision, it is good in wet rooms because it exhibits minimal swelling/deformation in humid environments with high air humidity.

The skilled person will appreciate that the invention is not limited to the embodiments described above, but that there may be variations without taking away from the inventive concept for that reason. For instance, the underfloor heating board can be used both in new construction as well as in renovation.

It is also appreciated that the hydronic heat can be conducted by something else than specifically a tube made of plastic, since the important thing is that the means transferring the hydronic heat is flexible and can be pressed down into the grooves.

## Claims

1. An underfloor heating wet room board (1), comprising a board (1) with grooves (2), wherein the grooves (2) are adapted to accommodate hydronic heating (4), said underfloor heating wet room board (1) also comprises a built-in fall on a top side (1A) of said underfloor heating wet room board (1), **characterized in that** said underfloor heating wet room board (1) is a MDF board and wherein said grooves (2) are arranged on an underside (1B) of said underfloor wet room heating board (1) and comprise an opening (9), said opening (9) being smaller than a diameter (D) of the grooves (2).

2. The underfloor heating wet room board according to claim 1, **characterized in that** said hydronic heating (4) comprises a tube (4).

3. The underfloor heating wet room board according to any one of the claims 1-2, **characterized in that** said underfloor heating wet room board (1) comprises a through-hole (3) for heating, ventilation and sanitation facilities.

4. The underfloor heating wet room board according to claim 1-3, **characterized in that** said opening (9) extends along the entire groove (2) on the underside (1B) of the underfloor heating wet room board (1).

5. The underfloor heating wet room board according to claim 2, **characterized in that** said tube (4) has an outer diameter (d) that is larger than said opening (9) and smaller than the diameter (D) of the groove.

6. The underfloor heating wet room board according to claim 1, **characterized in that** the diameter (D) of the groove lies in the range of 5-40 mm, more preferably the diameter (D) lies in the range of 6-30 mm, and most preferably the diameter (D) lies in the range of 7-16 mm.

7. An underfloor heating wet room board system, **characterized in that** it comprises an underfloor heating wet room board (1) according to claims 1-6.

8. A method for manufacturing an underfloor heating wet room board (1) according to the claims 1-7, **characterized in that** the method comprises the steps of:
- providing a MDF board (10);
- entering data such as length (L), width (B), thickness (T), and the desired fall of a finished underfloor heating wet room board into a computer controlled milling machine (11),
- entering data about where inlet (20) and outlet (21) for said groove (2) should be positioned on the board (12);
- allowing the computer controlled milling machine to mill out grooves (2) on an underside (1B) of the underfloor heating wet room board (1) as well as a through-hole (3) based upon the entered data (13);
- allowing the computer controlled milling machine to mill away material from a top side (1A) of the underfloor heating wet room board (1) based upon the entered data, until the desired fall from the outer edges of the board down toward the hole (3) is achieved (14).

9. The method for manufacturing an underfloor heating wet room board according to claim 8, **characterized in that** the method comprises the step of:
- pushing/pressing a tube (4) into the groove (2) on the underside (1B) (15) of the underfloor heating wet room board.

## Patentansprüche

1. Fußbodenheizungs-Nassraumplatte (1), umfassend eine Platte (1) mit Nuten (2), wobei die Nuten (2) angepasst sind, um eine Hydronik-Heizungsanlage (4) unterzubringen, wobei die Fußbodenheizungs-Nassraumplatte (1) ebenfalls eine eingebaute Neigung an einer Oberseite (1A) der Fußbodenheizung-Nassraumplatte (1) umfasst, **dadurch gekennzeichnet, dass** die Fußbodenheizungs-Nassraumplatte (1) eine MDF-Platte ist und wobei die Nuten (2) an einer Unterseite (1B) der Fußbodenheizungs-Nassraumplatte (1) angeordnet sind und eine Öffnung (9) umfassen, wobei die Öffnung (9) kleiner als ein Durchmesser (D) der Nuten (2) ist.

2. Fußbodenheizungs-Nassraumplatte (1) nach Anspruch 1, **dadurch gekennzeichnet, dass** die Hydronik-Heizungsanlage (4) ein Rohr (4) umfasst.

3. Fußbodenheizungs-Nassraumplatte (1) nach einem der Ansprüche 1 - 2, **dadurch gekennzeichnet, dass** die Fußbodenheizungs-Nassraumplatte (1) eine Durchgangsbohrung (3) für Heizungs-, Ventilations- und Sanitäranlagen umfasst.

4. Fußbodenheizungs-Nassraumplatte (1) nach Anspruch 1 - 3, **dadurch gekennzeichnet, dass** sich die Öffnung (9) entlang der gesamten Nut (2) an der Unterseite (1B) der Fußbodenheizungs-Nassraumplatte (1) erstreckt.

5. Fußbodenheizungs-Nassraumplatte (1) nach Anspruch 2, **dadurch gekennzeichnet, dass** das Rohr (4) einen Außendurchmesser (d) aufweist, der größer als die Öffnung (9) und kleiner als der Durchmesser (D) der Nut ist.

6. Fußbodenheizungs-Nassraumplatte nach Anspruch 1, **dadurch gekennzeichnet, dass** der Durchmesser (D) der Nut in dem Bereich von 5 - 40 mm liegt, wobei der Durchmesser (D) eher bevorzugt in dem Bereich von 6 - 30 mm liegt und der Durchmesser (D) am meisten bevorzugt in dem Bereich von 7 - 16 mm liegt.

7. Fußbodenheizungs-Nassraumplattensystem, **dadurch gekennzeichnet, dass** es eine Fußbodenheizungs-Nassraumplatte (1) nach den Ansprüchen 1 - 6 umfasst.

8. Verfahren zur Herstellung einer Fußbodenheizungs-Nassraumplatte (1) nach den Ansprüchen 1 - 7, **dadurch gekennzeichnet, dass** das Verfahren die nachfolgenden Schritte umfasst:
- Bereitstellen einer MDF-Platte (10);
- Eingeben von Daten, wie z. B. Länge (L), Breite (B), Stärke (T) und die gewünschte Neigung einer fertigen Fußbodenheizungs-Nassraumplatte in eine computergesteuerte Fräsmaschine (11),
- Eingeben von Daten bezüglich der Stelle, an der der Einlass (20) und der Auslass (21) für die Nut (2) an der Platte (12) positioniert sein sollte;
- Erlauben einer computergesteuerten Fräsmaschine, Nuten (2) an einer Unterseite (1B) der Fußbodenheizungs-Nassraumplatte (1), als auch eine Durchgangsbohrung (3) basierend auf den eingegebenen Daten (13) auszufräsen;
- Erlauben einer computergesteuerten Fräsmaschine, Material von einer Oberseite (1A) der Fußbodenheizungs-Nassraumplatte (1) basierend auf den eingegebenen Daten auszufräsen, bis die gewünschte Neigung von den Außenkanten der Platte nach unten zu dem Loch (3) hin erreicht (14) worden ist.

9. Verfahren zur Herstellung einer Fußbodenheizungs-Nassraumplatte nach Anspruch 8, **dadurch gekennzeichnet, dass** das Verfahren den folgenden Schritt umfasst:
- Drücken/Pressen eines Rohrs (4) in die Nut (2) an der Unterseite (1B) (15) der Fußbodenheizungs-Nassraumplatte.

## Revendications

1. Panneau de pièce humide (1) à chauffage sous plancher, comprenant un panneau (1) avec des rainures (2), dans lequel les rainures (2) sont à même de recevoir un chauffage hydronique (4), ledit panneau de pièce humide (1) à chauffage sous plancher comprenant également un dénivellement intégré sur une face supérieure (1A) dudit panneau de pièce humide (1) à chauffage sous plancher, **caractérisé en ce que** ledit panneau de pièce humide (1) à chauffage sous plancher est un panneau MDF et dans lequel lesdites rainures (2) sont agencées sur une face inférieure (1B) du panneau de pièce humide (1) à chauffage sous plancher et comprend une ouverture (9), ladite ouverture (9) étant plus petite qu'un diamètre (D) des rainures (2).

2. Panneau de pièce humide à chauffage sous plancher selon la revendication 1, **caractérisé en ce que** ledit chauffage hydronique (4) comprend un tube (4).

3. Panneau de pièce humide à chauffage sous plancher selon l'une quelconque des revendications 1 et 2, **caractérisé en ce que** ledit panneau de pièce humide (1) à chauffage sous plancher comprend un trou traversant (3) pour des installations de chauffage, de ventilation et d'assainissement.

4. Panneau de pièce humide à chauffage sous plancher selon les revendications 1 à 3, **caractérisé en ce que** ladite ouverture (9) s'étend le long de toute la rainure (2) sur la face inférieure (1B) du panneau de pièce humide (1) à chauffage sous plancher.

5. Panneau de pièce humide à chauffage sous plancher selon la revendication 2, **caractérisé en ce que** ledit tube (4) a un diamètre externe (d) qui est plus grand que ladite ouverture (9) et plus petit que le diamètre (D) de la rainure.

6. Panneau de pièce humide à chauffage sous plancher selon la revendication 1, **caractérisé en ce que** le diamètre (D) de la rainure se situe dans la plage de 5 à 40 mm, mieux encore le diamètre (D) se situe dans la plage de 6 à 30 mm et bien mieux encore le diamètre (D) se situe dans la plage de 7 à 16 mm.

7. Système de panneau de pièce humide à chauffage sous plancher, **caractérisé en ce qu'**il comprend un panneau de pièce humide (1) à chauffage sous plancher selon les revendications 1 à 6.

8. Procédé de fabrication d'un panneau de pièce humide (1) à chauffage sous plancher selon les revendications 1 à 7, **caractérisé en ce que** le procédé comprend les étapes consistant à :
- fournir un panneau MDF (10) ;
- saisir des données telles que la longueur (L), la largeur (B), l'épaisseur (T) et le dénivellement souhaité d'un panneau de pièce humide à chauffage sous plancher fini dans une machine de fraisage commandée par ordinateur (11),
- saisir des données sur l'emplacement où l'entrée (20) et la sortie (21) pour ladite rainure (2) doivent être positionnés sur le panneau (12) ;
- permettre à la machine de fraisage commandée par ordinateur de fraiser des rainures (2) sur une face inférieure (1B) du panneau de pièce humide (1) à chauffage sous plancher ainsi qu'un trou traversant (3) sur la base des données saisies (13) ;
- permettre à la machine de fraisage commandée par ordinateur de fraiser le matériau d'une face supérieure (1A) du panneau de pièce humide (1) à chauffage sous plancher sur la base des données saisies jusqu'à ce que le dénivellement souhaité des bords supérieurs du panneau vers le trou (3) soit obtenu (14).

9. Procédé de fabrication d'un panneau de pièce humide à chauffage sous plancher selon la revendication 8, **caractérisé en ce que** le procédé comprend l'étape consistant à :
- pousser/presser un tube (4) dans la rainure (2) sur la face inférieure (1B) (15) du panneau de pièce humide à chauffage sous plancher.
